# FASCICULE DE BREVET EUROPEEN

(11) **EP 3 130 019 B1**
(45) Date de publication et mention de la délivrance du brevet: **21.03.2018**
(21) Numéro de dépôt: 15717039.0
(22) Date de dépôt: 27.03.2015
(51) Int. Cl.: H01M 2/10, H01M 10/48, H01M 2/20, H01M 10/42, H01M 2/04

(54) **COUVERCLE POUR MODULE DE BATTERIE ÉQUIPE D'UNE PINCE DE CONNEXION ÉLECTRIQUE**
BATTERIEMODULABDECKUNG MIT EINER ELEKTROANSCHLUSSKLEMME
BATTERY MODULE COVER PROVIDED WITH AN ELECTRICAL CONNECTION CLIP

(30) Priorité: 11.04.2014 FR 1453262
(43) Date de publication de la demande: 15.02.2017
(73) Titulaire: Renault S.A.S., 92100 Boulogne-Billancourt (FR)
(72) Inventeur: BONNARD, Sylvain, 76000 Rouen (FR); GAMARD, Frédéric, 27400 Montaure (FR); BIANEIS, Hervé, 78180 Montigny le Bretonneux (FR)
(86) Numéro de dépôt international: PCT/FR2015/050789
(87) Numéro de publication internationale: WO 2015/155436

(56) Documents cités:
- WO-A1-2013/073176
- WO-A1-2013/150737
- WO-A2-2013/073179
- US-A1- 2010 055 993

## Description

### Domaine technique de l'invention

L'invention concerne le domaine de la connectique au niveau des modules de batterie.

L'invention a pour objet plus particulièrement un couvercle pour module de batterie intégrant une pince de connexion électrique

### État de la technique

Dans le domaine des batteries, un module de batterie comporte en général une pluralité de cellules. Ces cellules comportent généralement chacune deux bornes de connexion permettant à ces dernières d'être reliées en série et/ou en parallèle.

De telles batteries peuvent, par exemple, être utilisées dans le domaine de l'automobile.

Afin de gérer au mieux le module de batterie, il peut être avantageux de surveiller le comportement d'une (ou plusieurs) cellule en particulier, et de préférence de chacune des cellules, par exemple en mesurant une tension à un endroit choisi du module de batterie.

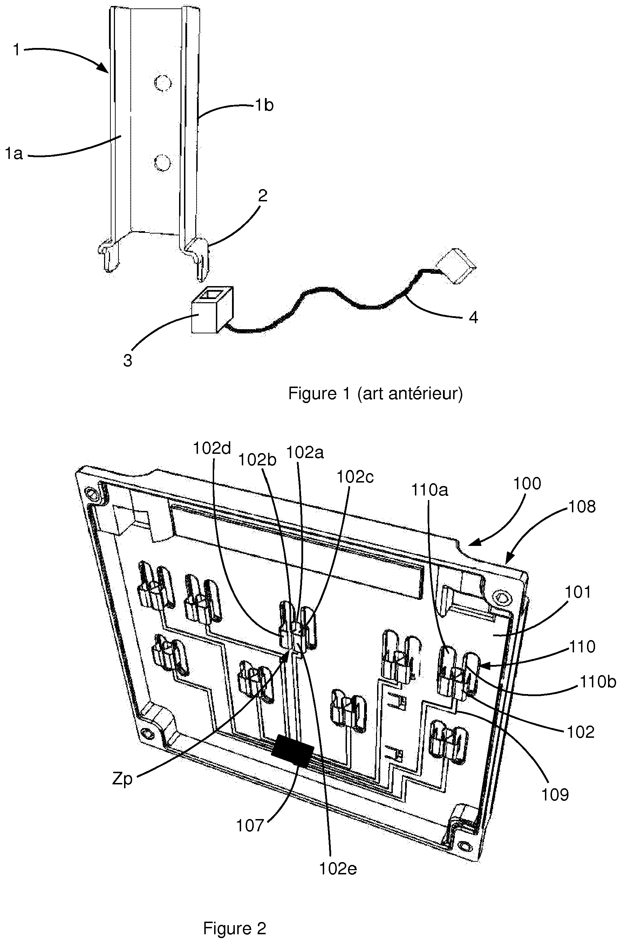

En ce sens, l'état de la technique enseigne que les cellules peuvent être reliées électriquement entre elles en série et/ou parallèle par un élément de connectique 1 (figure 1) aussi appelé bus bar dans le domaine. L'élément de connectique 1 comporte deux pattes 1a, 1b généralement soudées par ultrason respectivement à une borne d'une première cellule du module et à une borne d'une deuxième cellule du module. L'élément de connectique 1 comporte alors un organe mâle 2 sur lequel est monté un organe femelle 3. L'organe femelle 3 est quant à lui associé à un fil de connexion 4 cheminant vers un élément de gestion du module de batterie aussi appelé BMS dans le domaine, acronyme de l'anglais « Battery Management System ».

Une telle solution nécessite une intervention sur chacun des éléments de connectique que l'on souhaite relier au BMS. Il en résulte la présence d'une multitude de pièces à assembler, une faible compacité, une faible robustesse de qualité sur une fonction sécuritaire et un coût de montage manuel élevé.

La demande WO 2013/073176 divulgue un dispositif de stockage d'énergie électrique pour véhicule électrique ou hybride présentant de tels inconvénients.

### Objet de l'invention

Le but de la présente invention est de proposer une solution qui remédie à tout ou partie des inconvénients listés ci-dessus.

On tend vers ce but grâce à un couvercle pour module de batterie, ledit couvercle comprenant une face interne sur laquelle est montée au moins une pince de connexion électrique destinée à coopérer électriquement, en configuration d'accouplement du couvercle avec le module de batterie, avec une borne de mesure correspondante du module de batterie.

En particulier, le couvercle peut comporter un connecteur électrique relié électriquement à ladite au moins une pince de connexion électrique, ledit connecteur électrique étant disposé sur une face externe du couvercle. Par exemple, ladite au moins une pince de connexion électrique est reliée audit connecteur électrique par une piste électriquement conductrice imprimée sur la face interne ou incluse dans la paroi du couvercle entre les faces interne et externe. Le couvercle comporte au niveau de ladite au moins une pince de connexion électrique au moins une ouverture destinée au passage d'un outil permettant de faire varier ladite pince de connexion électrique d'une configuration de fermeture de la pince de connexion électrique vers une configuration d'ouverture de la pince de connexion électrique.

La pince de connexion électrique peut être conformée de sorte à présenter une force de rappel sollicitant constamment ladite pince de connexion électrique vers sa configuration de fermeture.

Selon une mise en oeuvre, ladite au moins une pince de connexion électrique comporte :
- une embase montée sur la face interne,
- deux lames de pincement s'étendant de manière convergente l'une vers l'autre à partir de ladite embase dans une direction opposée à la face interne pour former une zone de pincement de la borne de mesure correspondante,
- deux languettes s'étendant chacune respectivement d'une extrémité d'une des lames de pincement distante de ladite embase,
- deux parties concaves délimitées chacune par une lame de pincement correspondante et une languette correspondante, chacune des parties concaves faisant face à une ouverture pratiquée dans le couvercle et reliant la face interne du couvercle à la face externe du couvercle.

L'invention est aussi relative à un dispositif comportant un module de batterie muni d'au moins une borne de mesure, et d'un couvercle tel que décrit, ladite au moins une pince de connexion électrique du couvercle pinçant ladite au moins une borne de mesure correspondante dans une configuration d'accouplement du couvercle au module de batterie.

Le dispositif peut comporter une configuration d'assemblage ou de désassemblage du couvercle dans laquelle ladite au moins une pince de connexion électrique est maintenue ouverte, notamment par un outil adapté dont au moins une partie traverse le couvercle, alors que ladite au moins une borne de mesure correspondante est insérée dans une zone de pincement de ladite au moins une pince de connexion électrique et qu'aucun contact n'est réalisé entre ladite au moins une pince de connexion électrique et ladite au moins une borne de mesure correspondante.

Les cellules de la batterie peuvent être reliées en séries et/ou en parallèle par des éléments de connectique, chaque élément de connectique participant à une liaison en série du schéma électrique de liaison des cellules du module de batterie étant équipé d'une borne de mesure, et le couvercle comporte autant de pinces de connexion électrique que le module de batterie comporte de bornes de mesures, chacune des pinces de connexion électrique pinçant une unique borne de mesure correspondante.

L'invention est aussi relative à un procédé d'assemblage d'un dispositif tel que décrit et comportant les étapes suivantes :
- une fourniture du module de batterie,
- une fourniture du couvercle,
- un accouplement dudit couvercle audit module de batterie de telle sorte qu'au terme de l'étape d'accouplement ladite au moins une pince de connexion électrique assure un contact électrique avec ladite au moins une borne de mesure correspondante.

Préférentiellement, l'étape d'accouplement comporte les étapes successives suivantes :
- un actionnement de ladite au moins une pince de connexion électrique de sorte à la maintenir en position ouverte pour créer une zone d'insertion de ladite au moins une borne de mesure,
- un approchement du couvercle vers le module de batterie de sorte à insérer ladite au moins une borne de mesure correspondante dans ladite zone d'insertion,
- un relâchement de l'actionnement de ladite au moins une pince de connexion électrique de sorte à ce qu'elle se referme sur ladite au moins une borne de mesure correspondante.

En outre, le procédé peut comporter une étape d'utilisation d'un outil permettant de mettre en oeuvre l'étape d'actionnement de ladite au moins une pince de connexion électrique, ledit outil comportant des éléments montés de manière mobile l'un par rapport à l'autre de sorte à présenter un entretoisement variable, et l'étape d'utilisation de l'outil comporte les étapes suivantes :
- une insertion, à partir de la face externe du couvercle, de chacun des deux éléments dans une ouverture qui lui est associée et reliant la face externe du couvercle à la face interne du couvercle,
- une modification de l'entretoisement des deux éléments de sorte que l'interaction desdits deux éléments avec ladite au moins une pince de connexion électrique, du côté de la face interne du couvercle, provoque l'ouverture de ladite au moins une pince de connexion électrique.

L'invention est aussi relative à un procédé d'utilisation d'un dispositif tel que décrit comportant une étape de mesure d'un paramètre physique du module de batterie, notamment une tension, utilisant ladite au moins une pince de connexion électrique.

L'invention est aussi relative à un véhicule automobile comportant un dispositif tel que décrit et un système de supervision du module de batterie relié électriquement à ladite au moins une pince de connexion électrique. Le véhicule peut comporter un moteur électrique couplé pour entraîner au moins une roue du véhicule, ledit moteur étant alimenté électriquement par le module de batterie.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 représente un élément de connectique d'un module de batterie selon l'art antérieur,
- la figure 2 est une vue en perspective d'un couvercle selon un mode d'exécution particulier de l'invention,
- la figure 3 représente un module de batterie comportant seize cellules de batterie et destiné à coopérer avec le couvercle de la figure 2,
- la figure 4 est une vue partielle en perspective du module de batterie de la figure 3 représentant en partie haute les six premières cellules de gauche de la figure 3,
- la figure 5 illustre une pince de connexion électrique montée au couvercle 100 dans une position de fermeture sur la gauche de la figure 5, et dans une position d'ouverture sur la droite de la figure 5, la flèche centrale illustrant le passage de la position de fermeture à la position d'ouverture,
- la figure 6 illustre une vue détaillée en perspective d'une pince de connexion électrique,
- la figure 7 illustre un module de batterie sur lequel est monté le couvercle dans une phase d'assemblage ou de désassemblage dudit couvercle.

### Description de modes préférentiels de l'invention

L'invention décrite ci-après diffère notamment de l'art antérieur en ce qu'elle propose un couvercle pour module de batterie munie d'une pince judicieusement agencée.

Comme l'illustre la figure 2, le couvercle 100 pour module de batterie comprend une face interne 101 sur laquelle est montée au moins une pince de connexion électrique 102. Cette pince de connexion électrique 102 est destinée à coopérer électriquement avec une borne de mesure correspondante du module de batterie en configuration d'accouplement du couvercle avec le module de batterie. La borne de mesure est destinée à participer à la prise d'une mesure électrique au niveau di module de batterie.

On comprend donc que le couvercle 100 comporte des moyens aptes à coopérer avec le module de batterie pour assembler le couvercle 100 au module de batterie, en particulier à un boîtier du module de batterie.

De préférence, chaque pince de connexion électrique 102 est fixée au couvercle 100 par boutrolage, à l'aide rivet ou surmoulées dans le couvercle 100 si ce dernier est en matériau plastique.

En particulier, le couvercle 100 comporte, comme l'illustre l'exemple de la figure 2, une pluralité de pinces de connexion électrique 102, chacune de ces pinces de connexion électrique 102 étant destinée à coopérer avec une borne de mesure associée du module de batterie.

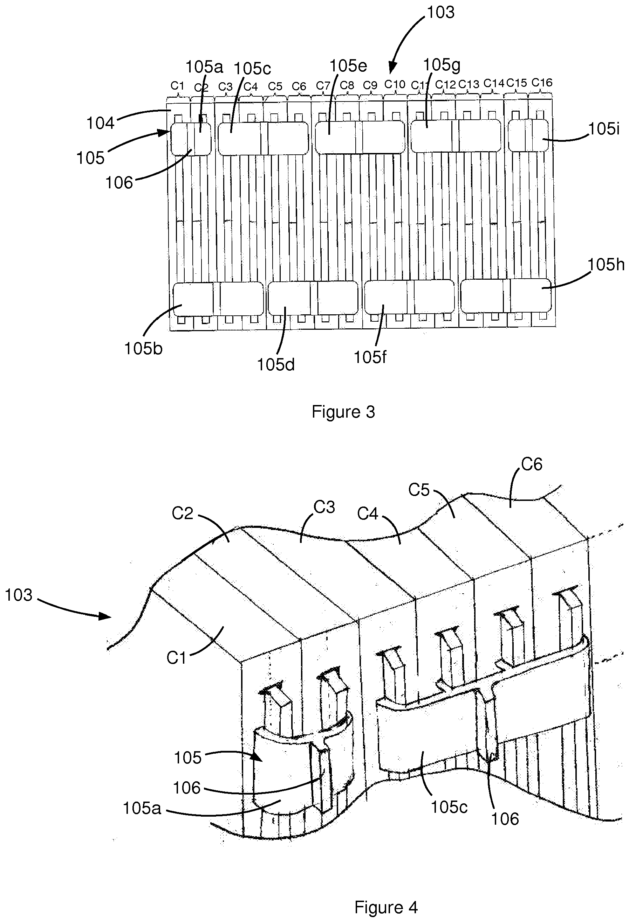

Les figures 3 et 4 illustrent le module de batterie 103 sur lequel sera reporté le couvercle 100 de la figure 2.

Le module de batterie 103 peut comporter une pluralité de cellules 104 reliées entre elles en série et/ou en parallèle, notamment par l'utilisation d'éléments de connectique 105 (ou bus bar). Chaque cellule forme alors un élément de stockage d'énergie configuré de sorte à la restituer (ou à en récupérer) à la demande. Le schéma électrique des liaisons des cellules entre elles permet d'obtenir un compromis entre les paramètres tension/courant/capacité du module de batterie.

En particulier, les figures 3, 4 et 7 illustrent un dispositif muni du module de batterie 103 muni d'au moins une borne de mesure 106. Le dispositif comporte en outre le couvercle 100 tel que décrit dans la présente description mais non représenté aux figures 3 et 4 pour des soucis de clarté. Dans une configuration d'accouplement du couvercle 100 au module, ladite au moins une pince de connexion électrique 102 du couvercle 100 pince ladite au moins une borne de mesure 106 associée.

Selon l'exemple particulier de la figure 3, dont une partie est illustrée en perspective à la figure 4, le module de batterie 103 comporte seize cellules C1, C2, C3, C4, C5, C6, C7, C8, C9, C10, C11, C12, C13, C14, C15, C16 agencées en huit couples de deux cellules reliées en parallèles (C1, C2), (C3, C4), (C5, C6), (C7, C8), (C9, C10), (C11, C12), (C13, C14), (C15, C16), lesdites couples étant reliés entre eux en série. Hormis les deux couples d'extrémités de la série, un même élément de connectique 105b, 105c, 105d, 105e, 105f, 105g relie à la fois deux cellules d'un premier couple de cellules et deux cellules d'un deuxième couple de cellules et donc réalise une liaison série entre les premier et deuxième couples de cellules tout en participant à la liaison parallèle du premier couple de cellules et à la liaison parallèle du deuxième couple de cellules. Dans cet exemple, le couvercle 100 de la figure 2 comporte neuf pinces 102 destinées à chacune pincer une borne de mesure 106 correspondante. Les neufs bornes de connexion 106 sont réparties de telle sorte à chacune appartenir à un élément de connectique 105b, 105c, 105d, 105e, 105f, 105g, 105h. En outre, deux éléments de connectique additionnels 105a, 105i respectivement associés aux couples de cellules d'extrémité de la série de couples de cellules comportent aussi chacun une borne de mesure 106. Bien entendu, ceci n'est qu'un exemple particulier que l'homme du métier pourra adapter en fonction des besoins, par exemple en jouant sur le nombre de cellules et sur le schéma électrique les reliant.

Autrement dit, on comprend que le dispositif comporte un module de batterie à plusieurs cellules interconnectées en série et/ou en parallèle, et au moins une, ou plusieurs bornes de mesure 106. Préférentiellement, des éléments de connectiques, notamment soudés aux bornes de cellules du module de batterie, réalisent les connexions électriques en séries et/ou parallèle. Chaque borne de mesure est avantageusement incluse à un élément de connectique correspondant. Chaque borne de mesure est préférentiellement plate de type TAB. En outre le dispositif comporte le couvercle 103 muni sur sa face interne 101 au moins une pince de connexion électrique 102. Chaque pince de connexion 102est disposée sur la face interne 101 du couvercle de sorte qu'en position d'accouplement du couvercle, elle se trouve en regard d'une borne de mesure 106 correspondante, et dès que le couvercle 100 est fermé sur le module de batterie, ladite pince de connexion électrique 102 pince ladite borne de mesure 106 correspondante.

Selon une réalisation particulière, les cellules de la batterie sont reliées en séries et/ou en parallèle par les éléments de connectique 105, chaque élément de connectique 105 participant à une liaison en série du schéma électrique de liaison des cellules du module de batterie étant équipé d'une borne de mesure 106, et le couvercle 100 comporte autant de pinces de connexion électrique 102 que le module de batterie 103 comporte de bornes de mesures 106, chacune des pinces de connexion électrique 102 pinçant une unique borne de mesure 106 correspondante.

Préférentiellement, le couvercle 100 comporte un connecteur électrique 107 relié électriquement à ladite au moins une pince de connexion électrique 102, ledit connecteur électrique 107 étant disposé sur une face externe 108 du couvercle 100. Autrement dit, le connecteur électrique 107 peut comporter des broches mâles et/ou femelles accessibles via la face externe 108. Ceci permet, une fois le couvercle en place, de n'avoir qu'un seul élément de liaison entre le connecteur électrique 107 et un élément de gestion du module de batterie, ou « BMS » (non représenté). Bien entendu, dans le cas où le couvercle 100 comporte une pluralité de pinces de connexion électrique 102, chacune peut être reliée à une broche distincte du connecteur électrique 107. Ceci permet notamment d'améliorer la compacité et le nombre de pièces à manipuler en regard de l'art antérieur.

Selon une mise en oeuvre (figure 2), le couvercle 100 est tel que ladite au moins une pince de connexion électrique 102 est reliée audit connecteur électrique 107 par une piste électriquement conductrice 109 imprimée sur la face interne 101 ou incluse dans la paroi du couvercle 100 entre les faces interne et externe du couvercle. Préférentiellement chaque pince 102 est reliée au connecteur électrique 107 par une piste électriquement conductrice 109, imprimée sur la face interne 101 du couvercle 100, qui lui est propre.

Afin de faciliter la tenue de chaque pince de connexion électrique 102 en position sur la borne de mesure 106 associée, la pince de connexion électrique 102 est conformée de sorte à présenter une force de rappel sollicitant constamment ladite pince de connexion électrique 102 vers sa configuration de fermeture. De préférence, lorsque la pince de connexion électrique 102 est dans une configuration de pincement d'une borne de mesure 106 associée, la force de rappel exerce encore une force tendant à plaquer la pince de connexion électrique 102 sur la borne de mesure 106.

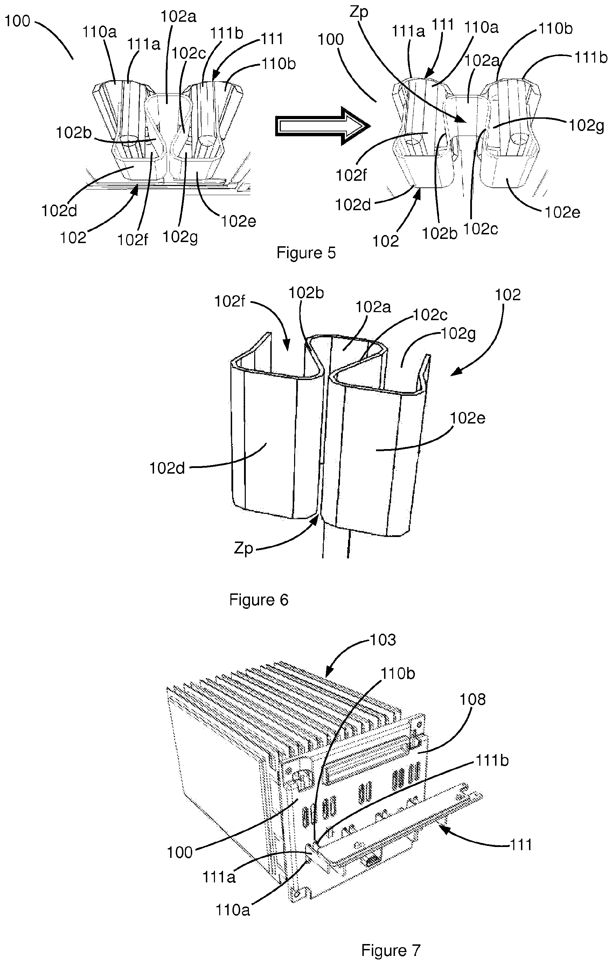

Chaque pince de connexion électrique 102 peut être conformée de sorte à s'ouvrir lorsqu'elle est plaquée contre la borne de mesure 106 associée et que le couvercle 100 se rapproche du module de batterie. Dans ce cas chaque borne de mesure 106 présente une forme pénétrante complémentaire à la pince de connexion électrique 102 de sorte que le rapprochement du couvercle 100 du module de batterie 103 induise, via l'interaction de la forme pénétrante avec la pince de connexion électrique 102, une ouverture de la pince de connexion électrique 102. Pour faciliter l'ouverture et la fermeture d'une pince de connexion électrique 102, le couvercle 100 comporte au niveau de ladite au moins une (et préférentiellement au niveau de chaque) pince de connexion électrique 102 au moins une ouverture 110 (préférentiellement deux ouvertures 110a, 110b) destinée au passage d'un outil 111 (figure 5) permettant de faire varier ladite pince de connexion électrique 102 d'une configuration de fermeture (partie de gauche de la figure 5) de la pince de connexion électrique 102 vers une configuration d'ouverture (partie de droite de la figure 5) de la pince de connexion électrique 102. On comprend ici que l'outil est destiné à être actionné du côté de la face extérieure 108 du couvercle 100.

Selon une mise en oeuvre préférée illustrée aux figures 2 et 6, ladite au moins une pince de connexion électrique 102 (et préférentiellement chaque pince de connexion électrique 102) comporte :
- une embase 102a montée sur la face interne 101 du couvercle 100,
- deux lames de pincement 102b, 102c s'étendant de manière convergente l'une vers l'autre à partir de ladite embase 102a, dans une direction opposée à la face interne 101 pour former une zone de pincement Zp de la borne de mesure 106 correspondante

- deux languettes 102d, 102e s'étendant chacune respectivement d'une extrémité d'une des lames de pincement 102b, 102c distante de ladite embase 102a,
- deux parties concaves 102f, 102g délimitées chacune par une lame de pincement 102b, 102c et une languette 102d, 102e correspondante (associée à ladite lame de pincement102b, 102c), chacune des parties concaves 102f, 102g faisant face à une ouverture 110a, 110b pratiquée dans le couvercle 100 et reliant la face interne 101 du couvercle 100 à la face externe 108 du couvercle 100.

Plus particulièrement, pour chaque pince de connexion électrique 102, les ouvertures 109a, 109b associées à ladite pince de connexion électrique 102 sont formées de part et d'autre d'une zone du couvercle 100 recevant l'embase 102a de la pince de connexion 102.

Ainsi, on comprend que de manière générale, dans le cadre du dispositif, ce dernier comporte une configuration d'assemblage ou de désassemblage du couvercle 100 dans laquelle ladite au moins une (et de préférence chaque) pince de connexion électrique 102 est maintenue ouverte, notamment par un outil 111 (figure 7) adapté dont au moins une partie traverse le couvercle 100, alors que ladite au moins une borne de mesure 106 correspondante est insérée dans la zone de pincement Zp (figure 5) de ladite au moins une pince de connexion électrique 102 et qu'aucun contact n'est réalisé entre la pince de connexion électrique 102 et ladite au moins une borne de mesure 106 correspondante.

De préférence, lorsque le couvercle 100 comporte une pluralité de pinces de connexion électrique 102 disposées sur la face interne 101 du couvercle et chacune destinée à coopérer avec une borne de mesure 106 correspondante, toutes les pinces 102 sont maintenues ouvertes simultanément. Ceci permet de faciliter grandement l'accouplement du couvercle 100 avec le module de batterie 103.

L'invention est aussi relative à un procédé d'assemblage d'un dispositif tel que décrit, ledit procédé comportant une étape de fourniture du module de batterie 103 tel que décrit, une étape de fourniture d'un couvercle 100 tel que décrit, et une étape d'accouplement dudit couvercle 100 audit module de batterie 103 de telle sorte qu'au terme de l'étape d'accouplement ladite au moins une pince de connexion électrique 102 assure un contact électrique avec ladite au moins une borne de mesure 106 correspondante.

Il résulte de ce qui a été dit précédemment, en particulier de préférence lorsque la pince de connexion électrique est constamment sollicité vers sa position de fermeture, que l'étape d'accouplement comporte préférentiellement les étapes successives suivantes :
- un actionnement de ladite au moins une pince de connexion électrique 102 (préférentiellement chaque pince de connexion électrique et de manière simultanée) de sorte à la maintenir en position ouverte pour créer une zone d'insertion de la borne de mesure 106 correspondante dans ladite au moins une pince de connexion électrique 102,
- un approchement du couvercle 100 vers le module de batterie de sorte à insérer la borne de mesure 106 dans ladite zone d'insertion,
- un relâchement de l'actionnement de ladite au moins une pince de connexion électrique 102 de sorte à ce qu'elle se referme, préférentiellement naturellement grâce à la force de rappel de la pince de connexion électrique 102, sur ladite au moins une borne de mesure 106 correspondante.

En particulier, le procédé comporte une étape d'utilisation d'un outil 111 (figures 5 et 7) permettant de mettre en oeuvre l'étape d'actionnement de ladite au moins une pince de connexion électrique 102, ledit outil 111 comportant des éléments 111a, 111b montés de manière mobile l'un par rapport à l'autre de sorte à présenter un entretoisement variable, et l'étape d'utilisation comporte les étapes suivantes :
- une insertion, à partir de la face externe 108 du couvercle 100, de chacun des deux éléments 111a, 111b dans une ouverture 110a, 110b qui lui est associée et reliant la face externe 108 du couvercle 100 à la face interne du couvercle 100,
- une modification de l'entretoisement des deux éléments 111a, 111b de sorte que l'interaction desdits deux éléments 111a, 111b avec ladite au moins une pince de connexion électrique 102, du côté de la face interne 101 du couvercle 100, provoque l'ouverture de ladite au moins une pince de connexion électrique 102.

Préférentiellement lorsque le couvercle 100 comporte une pluralité de pinces de connexion électrique 102, l'outil 111 comporte une pluralité de couples d'éléments 111a, 111b configurés de sorte à interagir simultanément avec tout ou partie (au moins deux) des pinces 102 de la pluralité de pinces. Lesdits couples d'éléments sont reliés entre eux de telle sorte à ce que la variation de l'entretoisement de l'un des couples d'éléments entraîne la même variation pour tous les autres couples d'éléments.

Il résulte de tout ce qui a été dit ci-avant les avantages suivants,
- peu de pièces à assembler
- connexion en vue de réaliser des mesures de tension en une étape d'assemblage,
- montage automatisé possible,
- bonne compacité d'une fonction de « mesure de tension » au niveau des cellules du module de batterie,
- Robustesse qualité.

L'utilisation des enseignements décrits permet de générer une économie quant à la fabrication du dispositif en termes de matières premières et en termes d'étapes d'assemblage.

L'invention est aussi relative à un procédé d'utilisation d'un dispositif tel que décrit. Le procédé comporte une étape de mesure d'un paramètre physique du module de batterie, notamment une tension, utilisant ladite au moins une pince de connexion électrique 102. Le paramètre physique mesuré est préférentiellement représentatif d'une mesure effectuée aux bornes d'une unique cellule du module de batterie 103 ou aux bornes d'un sous-ensemble de cellules du module de batterie 103. Dès lors, on comprend qu'en fonction de l'utilisation du module de batterie, l'homme du métier placera des pinces de connexion 102 et des bornes de mesure 106 à des emplacements adaptés aux besoins de l'utilisation.

Par ailleurs, un véhicule automobile peut comporter un dispositif tel que décrit et un système de supervision (« BMS ») du module de batterie relié à ladite au moins une pince de connexion électrique en vue de l'utiliser pour réaliser une mesure d'un paramètre physique du module de batterie. En particulier, le véhicule comporte un moteur électrique couplé pour entraîner au moins une roue du véhicule, ledit moteur étant alimenté électriquement par le module de batterie.

Chaque cellule du module de batterie peut être une cellule comportant du lithium.

Dans, la présente description, il a été décrit un module de batterie avec un seul couvercle. Cette réalisation n'est pas limitative et le dispositif peut comporter plusieurs couvercles du même type agencés par exemple sur des faces différentes du module de batterie de telle sorte que chaque couvercle est muni d'au moins une pince de connexion électrique pinçant, sur la face correspondante, une borne de mesure correspondante.

## Revendications

1. Couvercle (100) pour module de batterie (103), ledit couvercle (100) comprenant une face interne (101) sur laquelle est montée au moins une pince de connexion électrique (102) destinée à coopérer électriquement, en configuration d'accouplement du couvercle (100) avec le module de batterie (103), avec une borne de mesure (106) correspondante du module de batterie, **caractérisé en ce qu'**il comporte au niveau de ladite au moins une pince de connexion électrique (102) au moins une ouverture (110) destinée au passage d'un outil permettant de faire varier ladite pince de connexion électrique (102) d'une configuration de fermeture de la pince de connexion électrique (102) vers une configuration d'ouverture de la pince de connexion électrique (102).

2. Couvercle selon la revendication précédente, **caractérisé en ce qu'**il comporte un connecteur électrique (107) relié électriquement à ladite au moins une pince de connexion électrique (102), ledit connecteur électrique (107) étant disposé sur une face externe (108) du couvercle (100).

3. Couvercle selon la revendication précédente, **caractérisé en ce que** ladite au moins une pince de connexion électrique (102) est reliée audit connecteur électrique (107) par une piste électriquement conductrice (109) imprimée sur la face interne (101) ou incluse dans la paroi du couvercle entre les faces interne et externe.

4. Couvercle selon l'une quelconque des revendications précédentes, **caractérisé en ce que** la pince de connexion électrique (102) est conformée de sorte à présenter une force de rappel sollicitant constamment ladite pince de connexion électrique vers sa configuration de fermeture.

5. Couvercle selon l'une quelconque des revendications précédentes, **caractérisé en ce que** ladite au moins une pince de connexion électrique (102) comporte :
- une embase (102a) montée sur la face interne (101),
- deux lames de pincement (102b, 102c) s'étendant de manière convergente l'une vers l'autre à partir de ladite embase (102a) dans une direction opposée à la face interne (101) pour former une zone de pincement (Zp) de la borne de mesure (106) correspondante,
- deux languettes (102d, 102e) s'étendant chacune respectivement d'une extrémité d'une des lames de pincement (102b, 102c) distante de ladite embase (102a),
- deux parties concaves (102f, 102g) délimitées chacune par une lame de pincement (102b, 102c) correspondante et une languette (102d, 102e) correspondante, chacune des parties concaves (102f, 102g) faisant face à une ouverture (110a, 110b) pratiquée dans le couvercle (100) et reliant la face interne (101) du couvercle à la face externe (108) du couvercle (100).

6. Dispositif comportant un module de batterie (103) muni d'au moins une borne de mesure (106), et d'un couvercle (100) selon l'une quelconque des revendications précédentes, ladite au moins une pince de connexion électrique (102) du couvercle (100) pinçant ladite au moins une borne de mesure (106) correspondante dans une configuration d'accouplement du couvercle (100) au module de batterie (103).

7. Dispositif selon la revendication précédente, **caractérisé en ce qu'**il comporte une configuration d'assemblage ou de désassemblage du couvercle (100) dans laquelle ladite au moins une pince de connexion électrique (102) est maintenue ouverte, notamment par un outil adapté dont au moins une partie traverse le couvercle (100), alors que ladite au moins une borne de mesure (106) correspondante est insérée dans une zone de pincement de ladite au moins une pince de connexion électrique (102) et qu'aucun contact n'est réalisé entre ladite au moins une pince de connexion électrique (102) et ladite au moins une borne de mesure (106) correspondante.

8. Dispositif selon l'une des revendications 6 ou 7, **caractérisé en ce que** les cellules de la batterie sont reliées en séries et/ou en parallèle par des éléments de connectique (105), chaque élément de connectique (105) participant à une liaison en série du schéma électrique de liaison des cellules du module de batterie étant équipé d'une borne de mesure (106), et **en ce que** le couvercle (100) comporte autant de pinces de connexion électrique (102) que le module de batterie (103) comporte de bornes de mesures (106), chacune des pinces de connexion électrique (102) pinçant une unique borne de mesure (106) correspondante.

9. Procédé d'assemblage d'un dispositif selon l'une des revendications 6 à 8, **caractérisé en ce qu'**il comporte les étapes suivantes :
- une fourniture du module de batterie (103),
- une fourniture du couvercle (100),
- un accouplement dudit couvercle (100) audit module de batterie (103) de telle sorte qu'au terme de l'étape d'accouplement ladite au moins une pince de connexion électrique (102) assure un contact électrique avec ladite au moins une borne de mesure (106) correspondante.

10. Procédé selon la revendication précédente, **caractérisé en ce que** l'étape d'accouplement comporte les étapes successives suivantes :
- un actionnement de ladite au moins une pince de connexion électrique (102) de sorte à la maintenir en position ouverte pour créer une zone d'insertion de ladite au moins une borne de mesure (106),
- un approchement du couvercle (100) vers le module de batterie (103) de sorte à insérer ladite au moins une borne de mesure (106) correspondante dans ladite zone d'insertion,
- un relâchement de l'actionnement de ladite au moins une pince de connexion électrique (102) de sorte à ce qu'elle se referme sur ladite au moins une borne de mesure (106) correspondante.

11. Procédé selon la revendication précédente, **caractérisé en ce qu'**il comporte une étape d'utilisation d'un outil (111) permettant de mettre en oeuvre l'étape d'actionnement de ladite au moins une pince de connexion électrique (102), ledit outil (111) comportant des éléments (111a, 11b) montés de manière mobile l'un par rapport à l'autre de sorte à présenter un entretoisement variable, et **en ce que** l'étape d'utilisation de l'outil (111) comporte les étapes suivantes :
- une insertion, à partir de la face externe (108) du couvercle (100), de chacun des deux éléments (111a, 11b) dans une ouverture qui lui est associée et reliant la face externe (108) du couvercle (100) à la face interne (101) du couvercle (100),
- une modification de l'entretoisement des deux éléments (111a, 111b) de sorte que l'interaction desdits deux éléments (111a, 111b) avec ladite au moins une pince de connexion électrique (102), du côté de la face interne (101) du couvercle (100), provoque l'ouverture de ladite au moins une pince de connexion électrique (102).

12. Procédé d'utilisation d'un dispositif selon l'une des revendications 6 à 8, **caractérisé en ce qu'**il comporte une étape de mesure d'un paramètre physique du module de batterie (103), notamment une tension, utilisant ladite au moins une pince de connexion électrique (102).

13. Véhicule automobile, **caractérisé en ce qu'**il comporte un dispositif selon l'une des revendications 6 à 8 et un système de supervision du module de batterie (103) relié électriquement à ladite au moins une pince de connexion électrique (102).

14. Véhicule selon la revendication précédente, **caractérisé en ce qu'**il comporte un moteur électrique couplé pour entraîner au moins une roue du véhicule, ledit moteur étant alimenté électriquement par le module de batterie (103).

## Patentansprüche

1. Deckel (100) für ein Batteriemodul (103), wobei der Deckel (100) eine Innenseite (101) enthält, auf die mindestens eine elektrische Anschlussklemme (102) montiert ist, die dazu bestimmt ist, in einer Kopplungskonfiguration des Deckels (100) mit dem Batteriemodul (103) mit einem entsprechenden Messanschluss (106) des Batteriemoduls elektrisch zusammenzuwirken, **dadurch gekennzeichnet, dass** er im Bereich der mindestens einen elektrischen Anschlussklemme (102) mindestens eine Öffnung (110) aufweist, die für den Durchgang eines Werkzeugs bestimmt ist, das es ermöglicht, die elektrische Anschlussklemme (102) von einer Schließkonfiguration der elektrischen Anschlussklemme (102) in eine Öffnungskonfiguration der elektrischen Anschlussklemme (102) variieren zu lassen.

2. Deckel nach dem vorhergehenden Anspruch, **dadurch gekennzeichnet, dass** er einen elektrischen Verbinder (107) aufweist, der mit der mindestens einen elektrischen Anschlussklemme (102) elektrisch verbunden ist, wobei der elektrische Verbinder (107) auf einer Außenseite (108) des Deckels (100) angeordnet ist.

3. Deckel nach dem vorhergehenden Anspruch, **dadurch gekennzeichnet, dass** die mindestens eine elektrische Anschlussklemme (102) mit dem elektrischen Verbinder (107) durch eine elektrisch leitende Bahn (109) verbunden ist, die auf die Innenseite (101) gedruckt oder in die Wand des Deckels zwischen der Innen- und der Außenseite eingeschlossen ist.

4. Deckel nach einem der vorhergehenden Ansprüche, **dadurch gekennzeichnet, dass** die elektrische Anschlussklemme (102) so gestaltet ist, dass sie eine Rückstellkraft aufweist, die die elektrische Anschlussklemme durchgehend zu ihrer Schließkonfiguration hin beaufschlagt.

5. Deckel nach einem der vorhergehenden Ansprüche, **dadurch gekennzeichnet, dass** die mindestens eine elektrische Anschlussklemme (102) aufweist:
- eine auf die Innenseite (101) montierte Basis (102a),
- zwei Klemmlamellen (102b, 102c), die sich ausgehend von der Basis (102a) in einer Richtung entgegengesetzt zur Innenseite (101) konvergierend zueinander erstrecken, um einen Klemmbereich (Zp) des entsprechenden Messanschlusses (106) zu bilden,
- zwei Zungen (102d, 102e), die sich je von einem von der Basis (102a) entfernten Ende einer der Klemmlamellen (102b, 102c) erstrecken,
- zwei konkave Teile (102f, 102g), die je von einer entsprechenden Klemmlamelle (102b, 102c) und einer entsprechenden Zunge (102d, 102e) begrenzt werden, wobei jeder der konkaven Teile (102f, 102g) einer Öffnung (110a, 110b) gegenüberliegt, die im Deckel (100) ausgearbeitet ist und die Innenseite (101) des Deckels mit der Außenseite (108) des Deckels (100) verbindet.

6. Vorrichtung, die ein Batteriemodul (103) aufweist, das mit mindestens einem Messanschluss (106) und einem Deckel (100) nach einem der vorhergehenden Ansprüche versehen ist, wobei die mindestens eine elektrische Anschlussklemme (102) des Deckels (100) den mindestens einen entsprechenden Messanschluss (106) in einer Kopplungskonfiguration des Deckels (100) mit dem Batteriemodul (103) einklemmt.

7. Vorrichtung nach dem vorhergehenden Anspruch, **dadurch gekennzeichnet, dass** sie eine Einbau- oder Ausbaukonfiguration des Deckels (100) aufweist, in der die mindestens eine elektrische Anschlussklemme (102) offen gehalten wird, insbesondere durch ein geeignetes Werkzeug, von dem mindestens ein Teil den Deckel (100) durchquert, während der mindestens eine entsprechende Messanschluss (106) in einen Klemmbereich der mindestens einen elektrischen Anschlussklemme (102) eingeführt wird und kein Kontakt zwischen der mindestens einen elektrischen Anschlussklemme (102) und dem mindestens einen entsprechenden Messanschluss (106) hergestellt wird.

8. Vorrichtung nach einem der Ansprüche 6 oder 7, **dadurch gekennzeichnet, dass** die Zellen der Batterie von Anschlusselementen (105) in Reihe und/oder parallel geschaltet werden, wobei jedes Anschlusselement (105), das an einer Reihenverbindung des elektrischen Verbindungsschaltbilds der Zellen des Batteriemoduls mitwirkt, mit einem Messanschluss (106) ausgestattet ist, und dass der Deckel (100) so viele elektrische Anschlussklemmen (102) aufweist wie das Batteriemodul (103) Messanschlüsse (106) aufweist, wobei jede der elektrischen Anschlussklemmen (102) einen einzigen entsprechenden Messanschluss (106) einklemmt.

9. Verfahren zum Zusammenbau einer Vorrichtung nach einem der Ansprüche 6 bis 8, **dadurch gekennzeichnet, dass** es die folgenden Schritte aufweist:
- Bereitstellung des Batteriemoduls (103),
- Bereitstellung des Deckels (100),
- Kopplung des Deckels (100) mit dem Batteriemodul (103) derart, dass am Ende des Kopplungsschritts die mindestens eine elektrische Anschlussklemme (102) einen elektrischen Kontakt mit dem mindestens einen entsprechenden Messanschluss (106) gewährleistet.

10. Verfahren nach dem vorhergehenden Anspruch, **dadurch gekennzeichnet, dass** der Kopplungsschritt die folgenden aufeinanderfolgenden Schritte aufweist:
- Betätigung der mindestens einen elektrischen Anschlussklemme (102), um sie in offener Stellung zu halten, um einen Einführbereich des mindestens einen Messanschlusses (106) zu erzeugen,
- Annäherung des Deckels (100) an das Batteriemodul (103), um den mindestens einen entsprechenden Messanschluss (106) in den Einführbereich einzuführen,
- Unterbrechen der Betätigung der mindestens einen elektrischen Anschlussklemme (102), damit sie sich um den mindestens einen entsprechenden Messanschluss (106) schließt.

11. Verfahren nach dem vorhergehenden Anspruch, **dadurch gekennzeichnet, dass** es einen Schritt der Verwendung eines Werkzeugs (111) aufweist, das es ermöglicht, den Schritt der Betätigung der mindestens einen elektrischen Anschlussklemme (102) durchzuführen, wobei das Werkzeug (111) Elemente (111a, 11b) aufweist, die zueinander beweglich montiert sind, um einen variablen Abstand aufzuweisen, und dass der Schritt der Verwendung des Werkzeugs (111) die folgenden Schritte aufweist:
- Einführen, ausgehend von der Außenseite (108) des Deckels (100), jedes der zwei Elemente (111a, 11b) in eine Öffnung, die ihm zugeordnet ist und die die Außenseite (108) des Deckels (100) mit der Innenseite (101) des Deckels (100) verbindet,
- Ändern des Abstands der zwei Elemente (111a, 111b) derart, dass die Interaktion der zwei Elemente (111a, 111b) mit der mindestens einen elektrischen Anschlussklemme (102) auf der Seite der Innenseite (101) des Deckels (100) das Öffnen der mindestens einen elektrischen Anschlussklemme (102) bewirkt.

12. Verfahren zur Verwendung einer Vorrichtung nach einem der Ansprüche 6 bis 8, **dadurch gekennzeichnet, dass** es einen Schritt des Messens eines physikalischen Parameters des Batteriemoduls (103), insbesondere einer Spannung, aufweist, der die mindestens eine elektrische Anschlussklemme (102) verwendet.

13. Kraftfahrzeug, **dadurch gekennzeichnet, dass** es eine Vorrichtung nach einem der Ansprüche 6 bis 8 und ein Überwachungssystem des Batteriemoduls (103) aufweist, das elektrisch mit der mindestens einen elektrischen Anschlussklemme (102) verbunden ist.

14. Fahrzeug nach dem vorhergehenden Anspruch, **dadurch gekennzeichnet, dass** es einen gekoppelten Elektromotor aufweist, um mindestens ein Rad des Fahrzeugs anzutreiben, wobei der Motor vom Batteriemodul (103) elektrisch versorgt wird.

## Claims

1. Cover (100) for a battery module (103), said cover (100) comprising an inner face (101) whereon at least one electrical connection clip (102) is mounted, said clip being designed to cooperate electrically with a corresponding measurement terminal (106) of the battery module when the cover (100) is coupled to the battery module (103), **characterized in that** it comprises, at said at least one electrical connection clip (102), at least one opening (110), designed for passing a tool allowing said electrical connection clip (102) to be varied between a closed configuration of the electrical connection clip (102) and an open configuration of the electrical connection clip (102).

2. Cover according to the preceding claim, **characterized in that** it comprises an electrical connector (107) electrically connected to said at least one electrical connection clip (102), said electrical connector (107) being placed on an outer face (108) of the cover (100).

3. Cover according to the preceding claim, **characterized in that** said at least one electrical connection clip (102) is connected to said electrical connector (107) by an electrically conducting track (109) printed on the inner face (101) or enclosed in the wall of the cover between the inner and outer faces.

4. Cover according to any one of the preceding claims, **characterized in that** the electrical connection clip (102) is formed so as to have a return motion force constantly pulling said electrical connection clip towards its closed configuration.

5. Cover according to any one of the preceding claims, **characterized in that** said at least one electrical connection clip (102) comprises:
- a base (102a) mounted on the inner face (101),
- two clipping blades (102b, 102c) extending in a converging manner one towards the other from said base (102a), in a direction opposite the inner face (101) so as to form a clipping zone (Zp) of the corresponding measurement terminal (106),
- two tongue-like strips (102d, 102e) each extending respectively from one end of one of the clipping blades (102b, 102c) distant from said base (102a),
- two concave parts (102f, 102g), each delimited by a corresponding clipping blade (102b, 102c) and a corresponding tongue-like strip (102d, 102e), each concave part (102f, 102g) facing an opening (110a, 110b) made in the cover (100) and connecting the inner face (101) of the cover to the outer face (108) of the cover (100).

6. Device comprising a battery module (103) equipped with at least one measurement terminal (106) and a cover (100) according to any one of the preceding claims, said at least one electrical connection clip (102) of the cover (100) clipping said at least one corresponding measurement terminal (106) when the cover (100) is coupled to the battery module (103).

7. Device according to the preceding claim, **characterized in that** it comprises an assembly or disassembly configuration of the cover (100), wherein said at least one electrical connection clip (102) is held open, in particular by an appropriate tool, at least one part of which passes through the cover (100), while said at least one corresponding measurement terminal (106) is inserted into a clipping zone of said at least one electrical connection clip (102) and while no contact is made between said at least one electrical connection clip (102) and said at least one corresponding measurement terminal (106).

8. Device according to either of Claims 6 and 7, **characterized in that** the battery cells are connected in series and/or in parallel by connection units (105), each connection unit (105) that contributes to a series connection of the electric connections scheme of the battery module cells being equipped with a measurement terminal (106), and **in that** the cover (100) comprises as many electrical connection clips (102) as the battery module (103) has measurement terminals (106), each of the electrical connection clips (102) clipping a single corresponding measurement terminal (106).

9. Assembly process of a device according to one of Claims 6 to 8, **characterized in that** it comprises the following steps:
- procurement of the battery module (103),
- procurement of the cover (100),
- coupling of said cover (100) to said battery module (103) such that at the end of the coupling step, said at least one electrical connection clip (102) provides an electrical contact with said at least one corresponding measurement terminal (106).

10. Process according to the preceding claim, **characterized in that** the coupling step comprises the following successive steps:
- activation of said at least one electrical connection clip (102) so as to hold it in the open position in order to create a zone for inserting said at least one measurement terminal (106),
- converging the cover (100) with the battery module (103) so as to insert said at least one corresponding measurement terminal (106) in said insertion zone,
- relaxing the activation of said at least one electrical connection clip (102) such that it closes over said at least one corresponding measurement terminal (106).

11. Process according to the preceding claim, **characterized in that** it comprises a step of using a tool (111) making it possible to implement the activation step of said at least one electrical connection clip (102), said tool (111) comprising units (111a, 11b) mounted to be mobile one relative to the other so as to have variable bracing, and **in that** the step of using the tool (111) comprises the following steps:
- insertion, from the outer face (108) of the cover (100), of each of the two units (111a, 11b) into an opening that is associated with it and links the outer face (108) of the cover (100) to the inner face (101) of the cover (100),
- a change to the bracing of the two units (111a, 111b) such that the interaction of said two units (111a, 111b) with said at least one electrical connection clip (102), on the side of the inner face (101) of the cover (100), causes said at least one electrical connection clip (102) to open.

12. Process for using a device according to one of Claims 6 to 8, **characterized in that** it comprises a step for measuring a physical parameter of the battery module (103), in particular a voltage, using said at least one electrical connection clip (102).

13. Motor vehicle, **characterized in that** it comprises a device according to one of Claims 6 to 8 and a system for monitoring the battery module (103) electrically connected to said at least one electrical connection clip (102).

14. Motor vehicle according to the preceding claim, **characterized in that** it comprises a coupled electric motor for driving at least one wheel of the vehicle, said motor being electrically powered by the battery module (103).
